# EUROPÄISCHE PATENTSCHRIFT

(11) **EP 3 120 690 B1**
(45) Veröffentlichungstag und Bekanntmachung des Hinweises auf die Patenterteilung: **17.10.2018**
(21) Anmeldenummer: 16179746.9
(22) Anmeldetag: 15.07.2016
(51) Int. Cl.: A01F 15/07

(54) **BALLENWICKELEINRICHUNG, ERNTEBERGUNGSGERÄT UND VERFAHREN**
BALER, HARVESTING APPARATUS AND METHOD
ENRUBANNEUSE, APPAREIL DE RÉCOLTE ET PROCÉDÉ

(30) Priorität: 22.07.2015 DE 102015213848
(43) Veröffentlichungstag der Anmeldung: 25.01.2017
(73) Patentinhaber: Deere & Company, Moline, IL 61265 (US)
(72) Erfinder: Guerin, Sebastien, 25000 Besancon (FR); Chapon, Emmanuel, 70100 Velet (FR)
(74) Vertreter: Reichert, Christian

(56) Entgegenhaltungen:
- EP-A1- 1 502 493
- EP-A1- 2 050 330
- WO-A1-99/04612
- WO-A1-2010/151110

## Beschreibung

Die vorliegende Erfindung betrifft eine Ballenwickeleinrichtung zur Umhüllung eines Ballens mit einem Hüllmaterial, mit einer Aufnahmevorrichtung zur Aufnahme des Ballens während des Umhüllens und mit wenigstens einem Wickelarm, ein Erntebergungsgerät, in der Art einer Ballenpresse, einer Kombipresse oder eines Ballenwickelgeräts, mit einer Ballenwickeleinrichtung, sowie ein Verfahren zur Anpassung einer solchen Ballenwickeleinrichtung .

Ballenwickeleinrichtungen werden zur Verpackung von Ballen vorzugsweise von durch Ballenpressen aus Erntegut, beispielsweise aus Gras, gebildeten Ballen genutzt. Diese werden zur Gewinnung von kleineren Silagemengen komplett in ein luftundurchlässiges Material, beispielsweise in eine Folie, eingehüllt.

Übliche Ballenwickeleinrichtungen können Teil von Erntebergungsgeräten, beispielsweise in der Art eigenständiger Ballenwickelgeräte, sein, die an eine Ballenpresse oder ein anderes einen Ballen abgebendes Gerät angehängt werden, und einen Ballen nach Abschluss eines Pressvorgangs von der Ballenpresse übernehmen. Alternativ können sie einen Bestandteil eines von einem Erntebergungsgerät bzw. einer Ballenpresse unabhängigen Ballenwickelgeräts darstellen, beispielsweise in der Art, dass ein bereits vorgepresster Ballen auf die Ballenwickeleinrichtung des Ballenwickelgeräts aufgelegt wird, um diesen unabhängig von dem eigentlichen Pressvorgang zu umhüllen. Eine Ballenwickeleinrichtung kann aber auch fester oder lösbarer bzw. starrer oder beweglicher, beispielsweise verschwenkbarer, Bestandteil eines Erntebergungsgeräts, beispielsweise einer Ballenpresse bzw. einer auch als Kombipresse bezeichneten Presse-/Wickelkombination sein, wobei die Wickeleinrichtung der eigentlichen Presseinrichtung funktional nachgeordnet ist.

Die EP 1 502 493 A1 offenbart eine Ballenwickeleinrichtung mit einer Wickeleinheit und einer dieser zugeordneten, einen Wickeltisch und einen Rahmen aufweisenden Wickeltischeinrichtung zur Aufnahme und zum Umhüllen oder Verpacken des Erntegutballens, wobei der Wickeltisch höhenverstellbar ist.

Ferner offenbart die WO 99/04612 A1 eine Ballenpresse für Quaderballen mit einer Wickeleinrichtung und einem Wickeltisch zur Aufnahme des Ballens. Die Wickeleinrichtung sieht eine Transporteinrichtung vor, die den Ballen in Rotation versetzt und Mittel, die den Ballen umschnüren/umwickeln während dieser rotiert.

Wie oben offenbart weisen Ballenwickeleinrichtungen üblicherweise eine Aufnahmeeinrichtung in der Art eines Wickeltisch auf, der einen von einem beispielsweise als Ballenpresse ausgebildeten Erntebergungsgerät gebildeten bzw. abgegebenen Ballen aufnimmt. Abhängig von der Ballenpresse und/oder den jeweiligen Anforderungen an die Ballenpresse können die aufzunehmenden Ballen einen unterschiedlichen Durchmesser aufweisen. Bei bekannten Ballenwickeleinrichtungen ist zur Anpassung an verschiedene Ballendurchmesser ein aufwändiger Umbau des Ballenwickelgeräts häufig in der Art notwendig, dass Hüllmaterial führende Bauteile, wie zum Beispiel Wickelarme, in der Höhe und/oder in ihrem Abstand verstellt werden müssen.

Die der Erfindung zugrunde liegende Aufgabe wird darin gesehen, eine Ballenwickeleinrichtung, ein Erntebergungsgerät bzw. ein Verfahren zur Anpassung eines Erntebergungsgeräts der eingangs genannten Art anzugeben, durch welche die vorgenannten Nachteile überwunden werden.

Die Aufgabe wird erfindungsgemäß durch die Lehre der Patentansprüche 1, 6 bzw. 7 gelöst. Weitere vorteilhafte Ausgestaltungen und Weiterbildungen der Erfindung gehen aus den Unteransprüchen hervor.

Erfindungsgemäß wird eine Ballenwickeleinrichtung der eingangs genannten Art derart ausgebildet, dass die Aufnahmevorrichtung derart verstellbar ausgebildet ist, dass der Ballenmittelpunkt des zu umhüllenden Ballens für unterschiedliche Ballendurchmesser mit Bezug auf den wenigstens einen Wickelarm eine zumindest im Wesentlichen gleiche Position einnimmt. Dies vereinfacht die Anpassung einer Ballenwickeleinrichtung an Ballen unterschiedlichen Durchmessers. Nimmt der Ballen als solcher bzw. der Ballenmittelpunkt des Ballens für jeden Ballendurchmesser bzw. jeden Ballendurchmesser für den die Ballenwickeleinrichtung geeignet ausgebildet ist, die gleiche bzw. eine zumindest im Wesentlichen gleiche Position ein, so kann auf eine Verstellung anderer Bauteile der Ballenwickeleinrichtung, insbesondere eines Wickelarms oder mehrerer Wickelarme und/oder eines Rahmens der Ballenwickeleinrichtung, zumindest im Wesentlichen verzichtet werden. Die Aufnahmeeinrichtung weist ein oder mehrere Stützmittel auf. Das oder die Stützmittel greifen am Ballenumfang des zu umhüllenden Ballens an, um ihn in einer für die Umhüllung geeigneten Position oder Lage zu stabilisieren. Es ist denkbar, dass das Stützmittel in der Art einer beispielsweise ein- oder mehrteiligen Schale, als in den Ballen, vorzugsweise bereichsweise, eindringende ein- oder mehrzinkige Gabeln oder Spieße oder in jeder anderen geeigneten Form ausgebildet ist. Vorzugsweise sind zumindest zwei Stützmittel vorgesehen, welche zumindest im Wesentlichen in einer Ebene und/oder horizontal beabstandet angeordnet sind, so dass der Ballen zwischen diesen Stützmitteln aufgenommen werden kann. Die Stützmittel können einteilig oder mehrteilig ausgebildet sein. Die Stützmittel sind in der Art einer oder mehrerer Stützrollen ausgebildet, welche fest oder vorzugsweise drehbar an der Aufnahmeeinrichtung vorgesehen sind. Bilden die Stützmittel als solche bzw. die Stützarme mit den an ihnen vorgesehenen Stützmitteln zumindest annähernd die Schenkelenden bzw. die Schenkel eines Vs, so kann der Ballen innerhalb der Schenkel des Vs aufgenommen bzw. abgestützt werden. Der Scheitelpunkt wird durch den Schwenkpunkt bzw. das Schwenklager gebildet.

Sind die Aufnahmeeinrichtung bzw. die Stützmittel als solche mit Bezug auf die Wickelarme höhenverstellbar vorgesehen, so kann durch eine Höhenverstellung der Ballen als solcher bzw. sein Ballenmittelpunkt abhängig von der Größe bzw. dem Durchmessers des zu bildenden Ballens nach oben oder unten bewegt und somit in einfacher Weise in eine für ein Umhüllen geeignete Position gebracht werden. Sind mehrere Stützmittel, beispielsweise in der Art von Stützrollen vorgesehen, so können diese jeweils einzeln oder gemeinsam bzw. gekoppelt und/oder zusammen mit der Stützeinrichtung angehoben werden. Es kann aber auch vorgesehen sein, dass die Stützmittel statt dessen oder aber darüber hinaus mit Bezug aufeinander horizontal abstandsveränderlich vorgesehen sind. Eine Abstandsveränderung der Stützmittel und insbesondere von als Stützrollen ausgebildeten Stützmitteln bewirkt ein Angreifen der Stützmittel an unterschiedlichen Umfangsbereichen des Ballens. Sind die Stützmittel weiter beabstandet, so bewirkt dies bei gleichbleibender Ballengröße eine niedrigere Position des Ballens als solchem bzw. des Ballenmittelpunkts. Rücken die Stützmittel näher zusammen, so wird der Ballen angehoben, wodurch auch sein Mittelpunkt eine höhere Position einnimmt. Eine geeignete Abstandswahl ermöglicht eine gleichbleibende Positionierung des Ballens bzw. des Ballenmittelpunkts bei unterschiedlichen Ballendurchmessern.

Sind die Stützmittel an mit Bezug auf den Rahmen verschwenkbaren Stützarmen vorgesehen, so kann sowohl die Höhe der Stützmittel als auch deren Abstand in einfacher Art und Weise bzw. gemeinsam verändert werden. Die Stützarme sind an einem Rahmen der Ballenwickeleinrichtung an einem Schwenkpunkt mittels eines Schwenklager angebracht und um eine horizontale und quer zur Fahrtrichtung angeordnete Achse schwenkbar vorgesehen. Ist wenigstens ein die Stützmittel umschlingender Gurt vorgesehen, so kann der Ballen an seinem Ballendurchmesser durch den Gurt in einem größeren Bereich abgestützt werden, wodurch eine verbesserte Stabilisierung erzielt werden kann.

Es ist vorteilhaft, wenn der wenigstens eine Gurt in Abhängigkeit von dem Durchmesser des Ballens bzw. einer jeweiligen, einem dem Ballendurchmesser zugeordneten Position der Stützmittel eine unterschiedliche Spannung aufweist, vorzugsweise in der Art, dass die Spannung bei einem Ballen geringeren Durchmessers geringer und bei einem Ballen größeren Durchmessers größer ist, als bei einem Ballen mit einem mittleren Durchmesser. Auf diese Weise kann eine Abstützung von Ballen unterschiedlichen Durchmessers und daher zu erwartendem unterschiedlichen Gewicht, nicht nur an den Ballendurchmesser, sondern auch an ein Ballengewicht angepasst werden. Ein größerer, vermutlich schwerer Ballen kann so eine Unterstützung durch einen Gurt höherer Spannung, ein Ballen geringeren Durchmessers und zu erwartendem niedrigeren Gewicht eine Unterstützung durch einen Gurt geringerer Spannung erfahren. Dies kann in einfacher Weise durch eine Veränderung des Abstands der Stützmittel erreicht werden.

Eine Verstellung der Aufnahmeeinrichtung, der Stützmittel bzw. der Stützarme kann manuell oder motorisch erzielt werden. Sie kann beispielsweise mittels eines oder mehrerer Betätigungsmittel in der Art von Hydraulikzylindern, Zahnstangenantrieben oder Hebeleinrichtungen oder anderer geeigneter Mittel oder einer Kombination derselben erfolgen und beispielsweise durch eine an dem Erntebergungsgerät oder einem Zugfahrzeug vorgesehenen Druckquelle beaufschlagt oder auch durch Pump- oder Kurbelantriebe oder andere geeignete Einrichtungen betätigt werden.

Eine derartige Ballenwickeleinrichtung kann an einem Erntebergungsgerät, vorzugsweise an einem Erntebergungsgerät in der Art einer Ballenpresse, einer Kombipresse oder eines Ballenwickelgeräts vorgesehen sein. Die Ballenwickeleinrichtung kann integraler Teil eines solchen Erntebergungsgeräts oder auch optional vorgesehen sein.

Ein Verfahren zum Einstellung einer erfindungsgemäßen Ballenwickeleinrichtung, vorzugsweise in Verbindung mit einem zuvor beschriebenen Erntebergungsgerät, lehrt, dass die Ballenwickeleinrichtung zur Anpassung an Ballen unterschiedlichen Durchmessers derart verstellt wird, dass der Mittelpunkt des Ballens bei unterschiedlichen Ballendurchmessern zumindest im Wesentlichen die gleiche Position einnimmt.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Presse mit einer nachgeordneten Ballenwickeleinrichtung und
- Fig. 2: eine schematische Darstellung von einen Ballen abstützenden Stützrollen in unterschiedlichen Positionen respektive bei exemplarisch ausgewählten, unterschiedlichen Ballendurchmessern.

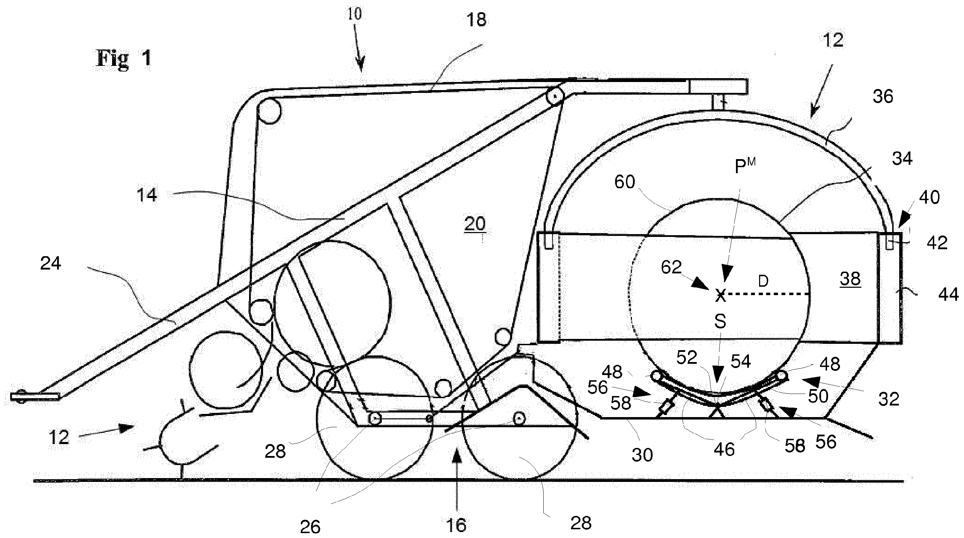

Fig. 1 zeigt ein Erntebergungsgerät 10 in der Art einer als Rundballenpresse ausgebildeten Presse mit einer nachgeordneten Ballenwickeleinrichtung 12. Das Erntebergungsgerät 10 weist im gezeigten Ausführungsbeispiel einen Rahmen 14, ein Fahrgestell 16, Presselemente 18, einen Pressraum 20 und eine Zuführvorrichtung 22 auf. Weiter ist eine Deichsel 24 vorgesehen, mittels der das Erntebergungsgerät 10 an ein nicht gezeigtes Zugfahrzeug, wie beispielsweise eine landwirtschaftliche Arbeitsmaschine bzw. einen Ackerschlepper anhängbar ist. Das Erntebergungsgerät 10 kann grundsätzlich von jeder herkömmlichen Bauart sein. Gemäß der Figuren handelt es sich bei dem Erntebergungsgerät 10 um eine Rundballenpresse. Eine solche kann beispielsweise einen festen oder variablen Pressraum aufweisen, und sowohl in der Landwirtschaft als auch im industriellen Bereich eingesetzt werden. Vorzugsweise ist die Presse 10 von der Bauart gemäß der deutschen Patentanmeldung 101 53 540.6, deren Offenbarung hiermit einbezogen wird.

Der Rahmen 12 wird von einem Schweiß- und/oder Schraubzusammenbau gebildet und stützt sich mittels eines Fahrgestells 14 auf dem Untergrund ab. Das Fahrgestell 14 ist in der Zeichnung in Tandemachsbauweise mit zwei Achsen 26 dargestellt, von denen jede an jeder Seite mit einem Rad 28 versehen ist. Auch eine Ausgestaltung mit nur einer Achse oder eine Abstützung mittels Raupen oder anderer geeigneter Mittel ist denkbar.

Die Ballenwickeleinrichtung 12 weist einen Rahmen 30, einen Wickeltisch bzw. eine Aufnahmevorrichtung 32, zur Aufnahme des zu umhüllenden Ballens 34, sowie Wickelarme 36 auf, die zur Umhüllung des Ballens 34 mit einem Durchmesser D mit einem Hüllmaterial 38, beispielsweise einer Folie, mittels eines nicht gezeigten, geeigneten Antriebs in Bewegung versetzt werden können. Die Wickelarme 34 weisen in ihren Endbereichen 40 Hüllmittelträger 42 zur Aufnahme eines Hüllmittelvorrats 44, beispielsweise in der Art von Rollen, auf.

Die Aufnahmevorrichtung 32 weist zwei Stützarme 46 auf, die in ihren Endbereichen mit Stützmitteln 48 versehen sind, die als Stützrollen ausgebildet sind. Die Stützmittel 48 werden von einem nur beispielhaft gezeigten flexiblen Gurt 50 umschlungen, wobei anzumerken ist, dass auch mehrere Gurte 50 vorgesehen sein können. Die Stützarme 46 sind an dem Rahmen 30 der Ballenwickeleinrichtung 12 in einem Schwenkpunkt S mittels eines Schwenklagers 52 um eine horizontale und quer zur Fahrtrichtung ausgerichtete Achse 54 schwenkbar angebracht und können mittels Betätigungsmitteln 56, die im gezeigten Ausführungsbeispiel in der Art von Hydraulikzylindern 58 ausgeführt sind, in ihrer Lage verändert werden.

Allgemein wird im Betrieb ein Ballen 34 von dem Erntebergungsgerät 10 nach Abschluss des Pressvorgangs abgegeben und an die Ballenwickeleinrichtung 12 mittels bekannter, nicht näher dargestellter Mittel übergeben. Der Ballen 34 wird durch die Aufnahmevorrichtung 32 in der Art aufgenommen, dass der Ballen 34 durch die Stützmittel 48 an seinem Umfang 60 abgestützt wird. Der Gurt 50 ist hierbei unterstützend vorgesehen. Nach Aufnahme des Ballens 34 durch die Aufnahmeeinrichtung 32 wird der Ballen mittels der Wickelarme 34 mit Hüllmaterial 38 umhüllt.

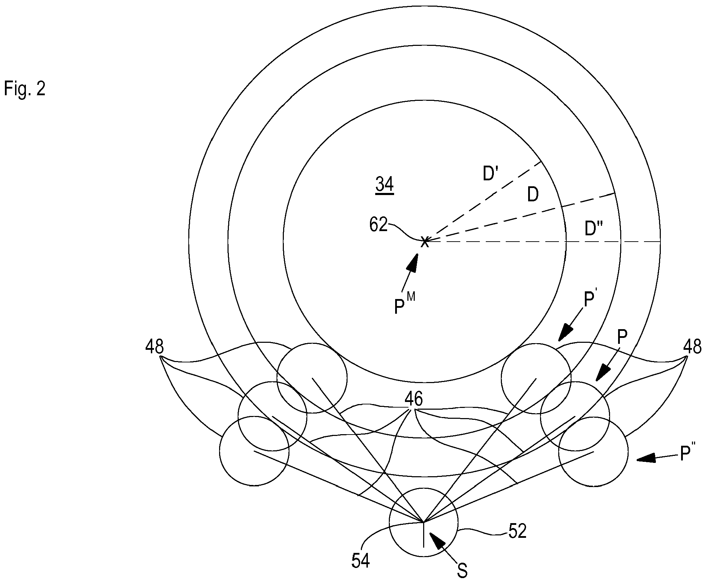

Es wird nun auch auf Figur 2 Bezug genommen, in der die Stützmittel 48 und die die Stützmittel 48 tragenden Stützarme 46 in drei unterschiedlichen Positionen P, P' P" korrespondierend zu drei unterschiedlichen, beispielhaft ausgewählten Ballendurchmessern D, D', D" dargestellt sind. Soll die Ballenwickeleinrichtung 12 einen Ballen 34 aufnehmen, der einen von der bisherigen Ballengröße abweichenden Durchmesser D', D" aufweist, so werden die Stützarme 46 durch die Betätigungsmittel 56 um die Achse 54 bei einem geringeren Ballendurchmesser D' nach oben und bei einem größeren Ballendurchmesser D" nach unten verschwenkt. Die Stützmittel 48 bewegen sich entsprechend entlang einer durch die Stützarme 46 bestimmten Kreisbahn und somit bei einem Verschwenken der Stützarme 46 nach oben zur Aufnahme eines Ballens 34 geringerer Größe mit Bezug auf das Schwenklager 52 nach oben und innen. Werden die Stützarme 46 zur Anpassung an einen Ballen 34 mit größerem Durchmesser D" nach unten verschwenkt, bewegen sich die Stützmittel 48 entsprechend nach unten und außen.

Durch die Veränderung der relativen Position der Stützmittel 48 zueinander wird auch die Spannung des die Stützmittel 48 umschlingenden Gurtes 50 verändert und zwar in der Art, dass sich bei einer Bewegung der Stützmittel 48 nach oben und innen zur Anpassung an einen Ballen 34 geringeren Durchmessers die Spannung des Gurts 50 reduziert und bei einer Anpassung an einen Ballen 34 mit größerem Durchmesser erhöht.

Wird also die Ballenwickeleinrichtung 12 an einen Ballen 34 geringerer Größe bzw. geringeren Durchmessers D' angepasst, so nimmt der Ballen 34 durch ein Verschwenken der Stützarme 46 sowohl bezogen auf das Schwenklager 52 als Verbindungsglied mit dem Rahmen 30 als auch bezogen auf die Wickelarme 36 nach oben und somit einer Lageveränderung der Stützmittel 48 nach oben und innen, eine bezogen auf die Wickelarme 36 höher gelegene und somit für einen Wickelvorgang geeignete Position P' ein. Der Gurt 50 weist in einer derartigen Stellung der Stützmittel 48 eine verringerte und somit an einen kleineren Ballen 34 angepasste Spannung auf. Dies ist günstig, da davon auszugehen ist, dass ein Ballen 34 kleineren Durchmessers D' auch ein geringeres Gewicht aufweist.

Wird die Ballenwickeleinrichtung 12 hingegen an einen Ballen 34 mit größerem Durchmesser D" angepasst, so nimmt der Ballen 34 eine bezogen auf die Wickelarme 36 tiefer gelegene und somit für einen Wickelvorgang für einen Ballen 34 dieser Größe geeignete Position P" ein. Der Gurt 50 weist in einer derartigen Stellung der Stützmittel 48 eine erhöhte und somit an einen größeren Ballen 36 angepasste Spannung auf. Dies ist günstig, da davon auszugehen ist, dass ein Ballen 34 größeren Durchmessers D" auch ein höheres Gewicht aufweist.

Verallgemeinert ausgedrückt, nimmt der jeweilige Ballenmittelpunkt 62 des Ballens 34 für alle einzustellenden Ballendurchmesser D, D', D" während des Umhüllungsvorgangs mit Bezug auf die Wickelarme 36 bzw. den Rahmen 30 eine zumindest im wesentlichen gleiche Position P^{M} ein.

Es kann vorgesehen sein, dass die Betätigungsmittel 56 gemeinsam oder unabhängig voneinander betätigbar sind, so dass die Stützarme 46 wiederum unabhängig oder vorzugsweise gemeinsam bzw. in Abhängigkeit voneinander verschwenkt werden können. Es ist auch denkbar, die Stützarme 46, durch nicht gezeigte Mittel derart zu verbinden, dass eine Lageveränderung der Stützarme 46 entweder mittels nur eines Betätigungsmittel 56 oder aber eine abhängig Verstellung mittels zweier oder mehrerer Betätigungsmittel 56 erreicht werden kann.

Alternativ ist es denkbar, dass die Stützarme 46 manuell oder mittels eines alternativ ausgebildeten Motors betätigt werden, der beispielsweise an dem Schwenklager 52 angreift oder in dieses integriert sein kann oder auch mittels eines Zahnstangen- oder Teleskopantriebs auf die Stützarme 46 einwirkt. Es können darüber hinaus Sicherungsmittel (nicht gezeigt) vorgesehen sein, die die Aufnahmearme 46 mit Bezug auf den Rahmen 30 in ihrer jeweiligen Lage sichern.

## Patentansprüche

1. Ballenwickeleinrichtung (12) zur Umhüllung eines Ballens (34) mit einem Hüllmaterial (38), mit einer Aufnahmevorrichtung (32) zur Aufnahme des Ballens (34) während des Umhüllens und mit wenigstens einem Wickelarm (36), wobei die Aufnahmevorrichtung (32) derart verstellbar ausgebildet ist, dass der Ballenmittelpunkt (62) des zu umhüllenden Ballens (34) für unterschiedliche Ballendurchmesser (D, D', D") mit Bezug auf den wenigstens einen Wickelarm (36) eine zumindest im Wesentlichen gleiche Position (P^{M}) einnimmt und wobei die Aufnahmevorrichtung (32), (ein) in der Art einer oder mehrerer Stützrolle(n) ausgebildete(s) und horizontal beabstandete(s) Stützmittel (48) zur umfangsseitigen Abstützung des Ballens (34) aufweist, **dadurch gekennzeichnet, dass** die Stützmittel (48) an mit Bezug auf einen Rahmen (30) der Ballenwickeleinrichtung (12) verschwenkbaren Stützarmen (46) vorgesehen sind, wobei die Stützmittel (48) als solche bzw. die Stützarme (46) mit den an ihnen vorgesehenen Stützmitteln (48) zumindest annähernd die Schenkelenden bzw. die Schenkel eines Vs bestimmen, dessen Scheitelpunkt durch den Schwenkpunkt S bzw. das Schwenklager (52) gebildet wird, wobei die Stützarme (46) an dem Rahmen (30) an dem Schwenkpunkt S mittels eines Schwenklagers (52) angebracht und um eine horizontal und quer zur Fahrtrichtung angeordnete Achse (54) schwenkbar vorgesehen sind.

2. Ballenwickeleinrichtung nach Anspruch 1, **dadurch gekennzeichnet, dass** die Stützmittel (48) mit Bezug auf die Wickelarme (36) höhenverstellbar und/oder mit Bezug aufeinander horizontal abstandsveränderlich vorgesehen sind.

3. Ballenwickeleinrichtung nach einem der Ansprüche 1 oder 2, **dadurch gekennzeichnet, dass** wenigstens ein die Stützmittel (48) umschlingender Gurt (50) vorgesehen ist.

4. Ballenwickeleinrichtung nach Anspruch 3, **dadurch gekennzeichnet, dass** der wenigstens eine Gurt (50) in Abhängigkeit von dem Durchmesser (D, D', D") des Ballens (34) bzw. einer jeweiligen, einem dieser Durchmesser (D, D', D") zugeordneten Position (P, P', P") der Stützmittel (48) eine unterschiedliche Spannung aufweist, in der Art, dass die Spannung bei einem Ballen geringeren Durchmessers (D') geringer und bei einem Ballen (34) größeren Durchmessers (D") größer ist, als bei einem Ballen mit einem mittleren Durchmesser (D).

5. Ballenwickeleinrichtung nach einem der vorherigen Ansprüche, **dadurch gekennzeichnet, dass** eine Verstellung der Aufnahmeeinrichtungen (32), der Stützmittel (48) bzw. der Stützarme (46) manuell oder motorisch unter Einsatz wenigstens eines Betätigungsmittels (56), beispielsweise in der Art wenigstens eines Hydraulikzylinders (58) erfolgt.

6. Erntebergungsgerät (10), in der Art einer Ballenpresse, einer Kombipresse oder eines Ballenwickelgeräts, mit wenigstens einer Ballenwickeleinrichtung (12) nach einem oder mehreren der vorherigen Patentansprüche.

7. Verfahren zur Anpassung einer Ballenwickeleinrichtung (12) nach einem der Ansprüche 1 bis 5, in Verbindung mit einem Erntebergungsgerät (10) gemäß Anspruch 6, **dadurch gekennzeichnet, dass** die Ballenwickeleinrichtung (12) zur Anpassung an Ballen (34) unterschiedlichen Durchmessers (D, D', D") derart verstellt wird, dass der Mittelpunkt (62) des Ballens (34) bei unterschiedlichen Ballendurchmessern (D, D', D") zumindest im Wesentlichen die gleiche Position einnimmt.

## Claims

1. Bale wrapping device (12) for enveloping a bale (34) with an enveloping material (38), having a receiving apparatus (32) for receiving the bale (34) during the enveloping operation, and having at least one wrapping arm (36), wherein the receiving apparatus (32) is configured to be adjustable in such a way that the bale centre point (62) of the bale (34) to be enveloped takes up an at least substantially identical position (P^{M}) with respect to the at least one wrapping arm (36) for different bale diameters (D, D', D") and wherein the receiving apparatus (32) has (a) horizontally spaced-apart support means (48) that is/are formed as one or more support roller(s), for circumferentially supporting the bale (34), **characterized in that** the support means (48) are provided on support arms (46) that are pivotable with respect to a frame (30) of the bale wrapping device (12), wherein the support means (48) as such, or the support arms (46) with the support means (48) provided thereon, at least approximately determine the limb ends or the limbs of a V, the vertex of which is formed by the pivot point S or the pivot bearing (52), wherein the support arms (46) are attached to the frame (30) at the pivot point S by means of a pivot bearing (52), and are provided so as to be pivotable about an axle (54) that is arranged horizontally and transversely with respect to the direction of travel.

2. Bale wrapping device according to Claim 1, **characterized in that** the support means (48) are provided so as to be vertically adjustable with respect to the wrapping arms (36) and/or so as to have a variable horizontal spacing with respect to one another.

3. Bale wrapping device according to either of Claims 1 and 2, **characterized in that** at least one belt (50) that loops around the support means (48) is provided.

4. Bale wrapping device according to Claim 3, **characterized in that** the at least one belt (50) has a different tension depending on the diameter (D, D', D") of the bale (34), or on a respective position (P, P', P"), assigned to one of these diameters (D, D', D"), of the support means (48), such that, in a bale with a smaller diameter (D'), the tension is less, and in a bale (34) with a greater diameter (D"), the tension is greater, than in a bale with an average diameter (D).

5. Bale wrapping device according to one of the preceding claims, **characterized in that** the receiving devices (32), the support means (48) and/or the support arms (46) are adjusted manually or by a motor using at least one actuating means (56), for example in the form of at least one hydraulic cylinder (58).

6. Harvesting appliance (10), of the baler, combination baler or bale wrapping appliance type, having at least one bale wrapping device (12) according to one or more of the preceding claims.

7. Method for adapting a bale wrapping device (12) according to one of Claims 1 to 5, in conjunction with a harvesting appliance (10) according to Claim 6, **characterized in that** the bale wrapping device (12) is adjusted for adaptation to bales (34) with different diameters (D, D', D") in such a way that the centre point (62) of the bale (34) takes up at least substantially an identical position for different bale diameters (D, D', D").

## Revendications

1. Dispositif d'enrubannage de balles (12) destiné à enrubanner une balle (34) avec une matière d'enrubannage (38), le dispositif d'enrubannage de balles comprenant un dispositif de réception (32) destiné à recevoir la balle (34) pendant l'enrubannage et au moins un bras d'enrubannage (36), le dispositif de réception (32) étant conçu de manière réglable de telle sorte que le centre (62) de la balle (34) à enrubanner occupe une position (P^{M}) au moins sensiblement identique par rapport à l'au moins un bras d'enrubannage (36) pour différents diamètres de balles (D, D', D") et le dispositif de réception (32) comportant un ou des moyens de support (48) espacés horizontalement, conçus à la manière d'un ou de plusieurs rouleaux de support et destinés à supporter périphériquement la balle (34), **caractérisé en ce que** les moyens de support (48) sont prévus au niveau de bras de support (46) pouvant pivoter par rapport à un cadre (30) du dispositif d'enrubannage de balles (12), lesdits moyens de support (48) en tant que tels ou les bras de support munis des moyens de support (48) au niveau de ceux-ci définissant au moins approximativement les extrémités de branches ou les branches d'un V dont le sommet est formé par le point de pivotement S ou le palier de pivotement (52), les bras de support (46) étant montés sur le cadre (30) au niveau du point de pivotement S au moyen d'un palier de pivotement (52) et étant prévus de manière à pouvoir pivoter sur un axe (54) disposé horizontalement et transversalement par rapport à la direction de déplacement.

2. Dispositif d'enrubannage de balles selon la revendication 1, **caractérisé en ce que** les moyens de support (48) sont prévus de manière réglable en hauteur par rapport aux bras d'enrubannage (36) et/ou de manière à pouvoir être espacés horizontalement les uns des autres.

3. Dispositif d'enrubannage de balles selon l'une des revendications 1 ou 2, **caractérisé en ce qu'**il est prévu au moins une sangle (50) enroulée autour des moyens de support (48).

4. Dispositif d'enrubannage de balles selon la revendication 3, **caractérisé en ce que** l'au moins une sangle (50) a une tension différente en fonction du diamètre (D, D', D") de la balle (34) ou d'une position respective (P, P', P") des moyens de support (48) qui est associée à l'un de ces diamètres (D, D', D") de telle manière que la tension est plus faible pour une balle de plus petit diamètre (D') et plus élevée pour une balle (34) de plus grand diamètre (D") que pour une balle de diamètre moyen (D).

5. Dispositif d'enrubannage de balle selon l'une des revendications précédentes, **caractérisé en ce que** le réglage des dispositifs de réception (32), des moyens de support (48) ou des bras de support (46) est effectué manuellement ou par moteur à l'aide d'au moins un moyen d'actionnement (56), par exemple à la manière d'au moins un cylindre hydraulique (58).

6. Dispositif de récolte (10), à la manière d'une presse à balles, d'une presse combinée ou d'un appareil d'enrubannage de balles, comprenant au moins un dispositif d'enrubannage de balles (12) selon l'une ou plusieurs des revendications précédentes.

7. Procédé d'adaptation d'un dispositif d'enrubannage de balles (12) selon l'une des revendications 1 à 5, en liaison avec un appareil de récolte (10) selon la revendication 6, **caractérisé en ce que** le dispositif d'enrubannage de balles (12) est réglé de manière à l'adapter à des balles (34) de diamètres différents (D, D', D") de telle sorte que le centre (62) de la balle (34) occupe au moins sensiblement la même position pour différents diamètres de balles (D, D', D").
